# EUROPEAN PATENT SPECIFICATION

(11) **EP 3 429 343 B1**
(45) Date of publication and mention of the grant of the patent: **29.07.2020**
(21) Application number: 17712015.1
(22) Date of filing: 14.03.2017
(51) Int. Cl.: A01K 73/05

(54) **A MULTI-FOIL LIFT FORCE CREATOR FOR A FISHING TRAWL**
EIN AUFTRIEBSKRAFTSCHÖPFER MIT MULTIPLE TRAGFLÄCHENPROFILE
UN CRÉATEUR DE FORCE DE PORTANCE AVEC PLUSIEURS FOILS

(30) Priority: 15.03.2016 EP 16160315
(43) Date of publication of application: 23.01.2019
(73) Proprietor: Volu Ventis ApS, 8600 Silkeborg (DK); P/F Vónin, 530 Fuglafjørdur (FO)
(72) Inventor: HJORT, Søren, 8600 Silkeborg (DK)
(74) Representative: Zacco Denmark A/S
(86) International application number: PCT/DK2017/050073
(87) International publication number: WO 2017/157398

(56) References cited:
- FR-A- 1 150 333
- GB-A- 682 349
- US-A- 2 638 695
- US-A- 3 007 273

## Description

The present invention relates to a multi-foil lift force creator comprising a plurality of hydrofoil elements to be arranged between spherical buoyancy elements (floats or gravity elements) of a fishing trawl.

### Background of the invention

For many decades, spherical floats tied in a long row to the trawl net head rope have been the preferred method for providing vertical force on the trawl net opening during trawling operation. Several hundred floats can be tied to the upper head rope in a single row. Typical float diameters are 20.32 centimetres (8 inches) and 27.94 centimetres (11 inches). They are typically made from a very hard plastic material and, depending on the material thickness, they can operate on any relevant depth for commercial trawling down to below 1000 meters.

The use of forcing devices on the trawl net head ropes serves the purpose of opening the trawl net vertically. By contrast, the lateral spreading force on the trawl net is provided by the trawl doors being towed by the fishing trawler vessel between the vessel and the trawl net. The forces needed for opening the trawl net vertically are normally provided by spherical buoyancy elements, which are air-filled floats on the upper head rope (also called "floatline") and heavy gravity elements on the lower head rope (also called "footrope"). If sufficient vertical forcing on the head rope is not provided, the trawl net opening becomes too narrow, thereby limiting the catch.

The force provided by the floats is an upward buoyancy force due to the entrapped content of air within the floats. Hydro-dynamically, the floats are impacted by a horizontal drag force when towed through the water, but no lift force. By contrast, the working principle of trawl doors providing the outward-directed lateral spreading forces on the trawl net is based on hydrodynamic lift forces. Thus, the trawl net opening forces originate from a combination of buoyancy forces (floats and gravity elements) and hydrodynamic forces (trawl doors).

This combination of the two types of forces can be a disadvantage, because the buoyancy force is constant, irrespective of the trawling velocity, whereas the magnitude of the hydrodynamic force is proportional to the square of the trawling velocity. This means that a preferred balance between buoyancy and hydrodynamic forces occurs only at a very specific towing velocity. Too low towing velocities result in too low ratios between hydrodynamic forces (the trawl doors) and buoyancy forces (floats and gravity elements), whereas too high towing velocities result in too high ratios between hydrodynamic forces and buoyancy forces.

Another disadvantage of spherical floats is that the actual upward force they provide is small considered the physical space they occupy.

Document US 2 638 695 A discloses a lift force creator comprising a hydrofoil element arranged between two spherical floats, for being mounted on a fishing trawl head rope. Document US 3 007 273 A discloses a multi-foil lift force creator wherein a plurality of hydrofoil elements are stacked in a chamber between a buoyancy element at a front portion of the lift force creator and a trailing edge of the lift force creator. Documents GB 682 349 A and FR 1 150 333 A disclose each a lift force creator comprising one or more hydrofoil elements coupled to a buoyancy element.

### Brief description of the invention

It is an object of the present invention to provide a solution for obtaining the desired vertical force on the trawl net opening during trawling operation without the above-mentioned disadvantages of the methods known in the art.

The invention according to claim 1 elates to a multi-foil lift force creator for a fishing trawl, said multi-foil lift force creator comprising a plurality of hydrofoil elements aligned in a stacked manner and designed to be arranged between and attached rigidly at both ends to a spherical buoyancy element in the form of a float or gravity element for being mounted on a fishing trawl head rope, wherein the hydrofoil elements are shaped to deflect the water during towing of the trawl net in such a way that the hydrodynamic force thereby created complements the buoyancy force from the buoyancy elements, and wherein, rather than having butt ends, the hydrofoil elements join smoothly to multi-foil end caps fitting tightly around the two buoyancy elements at the ends of the multi-foil lift force creator, respectively.

Thus, the invention exploits the significant hydrodynamic lift forces created by towing multiple hydrofoil shaped elements through the water as well as the dynamic stability obtained by rigidly connecting said multiple hydrofoil shaped elements to existing spherical buoyancy elements. The invention relates to such use of hydrofoil forces both for upward directed lift forcing contributing to the upward buoyancy forces from the floats and for downward directed lift forcing contributing to the downward buoyancy forces from the gravity elements.

The geometry of the multi-foil lift force creator is designed such that the combined forcing from said multi-foil lift force creator and the two floats will be in dynamic equilibrium at a position, where the hydrodynamic lift is very high and where the resulting mechanical moment around the head rope "hinge line" is zero, i.e. in balance.

The plurality of stacked hydrofoils in the multi-foil lift force creator do not occupy more space than the space that would have been occupied by spherical floats if the multi-foil lift force creator had not been used. Thus, the space occupied by the lift force creator is roughly equivalent with the space otherwise occupied by the buoyancy elements it has replaced. The comparative occupation of space is important, especially when the trawl net is hauled in to harvest the catch and the head rope is lined up in lanes on the trawl deck.

Another important aspect is the geometric smoothness of the multi-foil lift force creator assembly, which shall prevent entanglement with any other part of the trawl net. The disadvantages of the traditional method with spherical floats along the entire length of the upper head rope are circumvented in the following ways:
• Increased overall vertical forcing:
Typical test results for the relative overall force (hydrodynamic lift + buoyancy) when replacing a 1-2-3-4 float sequence with a sequence consisting of float 1, a multi-foil lift force creator and float 4 (the two floats 2 and 3 having been replaced by the multi-foil lift force creator), is listed below. In this list, 100% corresponds to the buoyancy forcing from the baseline 1-2-3-4 float sequence.

| | | |
|---|---|---|
| ∘ | At 2.5 knots: | 300% |
| ∘ | At 3.0 knots: | 400% |
| ∘ | At 3.5 knots: | 525% |
| ∘ | At 4.0 knots: | 650% |
| ∘ | Above 4.0 knots: | > 650% |

The two lowest towing velocities in this list are typical for bottom trawling for, e.g., shrimps and codfish or pollack, respectively, whereas the higher velocities are suitable for pelagic trawling for herring, mackerel and other "open water" fish species.
• Improved scalability between the lateral forcing on the trawl net from the trawl doors and the vertical forcing from the head rope devices (floats and/or multi-foil lift force creators and gravity elements):
Application of multi-foil lift force creators on a head rope causes most of the vertical forcing thereon to be of hydrodynamic rather than buoyancy type, and therefore scale in magnitude with the square of the towing velocity just like the lateral forcing from the trawl doors. The trawl net opening will therefore maintain its intended shape over a range of towing velocities instead of being operationally dependent of a specific narrowly defined target velocity.

Other tests have shown that the drag forces acting on the trawl configuration due to resistance from the water when towing the trawl configuration through the water are unchanged or even slightly reduced when using multi-foil lift force creators according to the present invention compared to using buoyance elements only as is known in the art.

Before any further description, it should be noted that the term "leading edge" is to be understood as the point at the front of a hydrofoil element that has maximum curvature, and that the term "trailing edge" is to be understood as the sharp edge point at the rear of a hydrofoil element that has maximum curvature. It should also be noticed that the terms "front", "rear", "upper side", "lower side", "above", and "below" refer to cross-sectional views of the multi-foil lift force creator. The reference for these positional terms is the hydrofoil chord line of each hydrofoil element, defined as the imaginary connecting line between its start at the leading edge in the direction of towing and its end at the trailing edge in the counter-direction of towing. "Front" indicates parallel directional towards the start of the hydrofoil chord line, and "rear" indicates parallel directional towards the end of the hydrofoil chord line. The remaining positional terms relate to the perpendicular direction, i.e. the direction of the hydrofoil chord line rotated 90 degrees in the clockwise direction. "Upper" indicates parallel directional towards the start of said rotated chord line, and "lower" indicates parallel directional towards the end of said rotated chord line. "Above" and "below" also refer to said rotated chord line of any of the hydrofoils.

In an embodiment of the invention, the multi-foil lift force creator is made of a hard plastic elastomer material, such as polyurethane.

The use of such a material ensures that the structure is stiff enough to maintain its hydrodynamic shape when being towed through the water and flexible enough to deflect elastically in shape when hit, squeezed, torn or otherwise mechanically impacted by other trawl net items during normal operation.

The robustness requirements to the multi-foil lift force creator are multiple: Continuous operation for years, marine environment, high mechanical impacts, abrasion, wear and tear etc. Many plastic elastomer materials fulfil these basic requirements. The elastomer class of plastics is vast and makes it possible to select and create a suitable elastomer type that meets these requirements. Besides, elastomers are relatively inexpensive and well suited for low processing-time casting, e.g. by injection moulding.

In an embodiment of the invention, the multi-foil lift force creator further comprises one or more structural stiffeners arranged to pass through the hydrofoils elements thereof.

The possible need for one or more structural stiffeners to increase the structural stiffness of the multi-foil lift force creator depends on the towing velocity, on the material, from which the multi-foil lift force creator is made, and on the hydrofoil span length between the multi-foil end caps. The structural stiffener(s) penetrate(s) some or all of the hydrofoils and provide(s) a structural bond between these hydrofoils.

The structural bond can, for instance, be obtained through casting, through using bolted joints or the like. The cross-sectional shape of the structural stiffener(s) will preferably be circular, but it could also be quadratic or otherwise shaped. For instance, the cross-sectional shape of the structural stiffener(s) can be elongated in the towing direction, although this might be disadvantageous when the multi-foil lift force creator is positioned close to the ends of the trawl head rope, where there is a skew angle between the towing direction and said trawl head rope. This skewness could cause an elongated cross-sectional shape of the structural stiffener(s) to introduce flow blockage and add unwanted drag forces, while also decreasing the lift force efficiency of the multi-foil lift force creator.

In an embodiment of the invention, a cross-section of the plurality of hydrofoil elements consists essentially of a plurality of concentric circular arc sections.

The material used for manufacturing the multi-foil lift force creator must be hard enough to endure the hydrodynamic forces so that the elastic deformation of the hydrofoil elements is kept small and insignificant. At the same time, it must be flexible enough to sustain large deflections caused by squeezing, towing and being hit by, e.g., the heavy gravity elements on the lower trawl head rope (the "footrope"), especially when hauling in the entire trawl onto the trawl deck during normal operation.

These requirements render it attractive to use a mouldable plastic elastomer as manufacturing material for the multi-foil lift force creator. In order to use a simple mould with a lower and an upper part that are hinged around a common axis parallel to the span-wise (length) direction of the hydrofoil elements, the hydrofoil element cross-sections must be designed according to this. One way to fulfil the geometric requirements imposed by using said simple mould configuration, is to geometrically construct the hydrofoil element cross-sections as co-centric circular arc sections, so that the centre of each of these arc sections coincide. This centre must then coincide with the hinge axis for the lower and upper part of the mould. The use of coinciding arc segment centres and hinge axis ensures that proper de-forming (de-moulding) of a cast multi-foil lift force creator specimen can take place after moulding without any slip problems.

The invention according to claim 5 relates to a multi-foil lift force creator assembly for a fishing trawl, said multi-foil lift force creator assembly comprising a multi-foil lift force creator as described above and two spherical buoyancy elements in the form of floats or gravity elements for being mounted on a fishing trawl head rope, wherein the multi-foil lift force creator is attached rigidly at both ends to the two buoyancy elements, respectively.

In an embodiment of the invention, the two buoyancy elements are floats.

In this configuration, the multi-foil lift force creator assembly is to be used on the upper trawl head rope (the "floatline") of a trawl net for creation of an upward directed force during trawling operation therewith. The resulting upward force consisting of a combination of the buoyancy force from the floats and the hydrodynamic lift force from the multi-foil lift force creator assembly significantly exceeds the buoyancy force acting on said floatline if it had been equipped with floats only.

In an embodiment of the invention, the two buoyancy elements are gravity elements.

In this configuration, the multi-foil lift force creator assembly is to be used on the lower trawl head rope (the "footrope") of a trawl net for creation of a downward directed force during trawling operation therewith. The resulting downward force consisting of a combination of the negative buoyancy force from the gravity elements and the negative hydrodynamic lift force from the multi-foil lift force creator assembly significantly exceeds the negative buoyancy force acting on said footrope if it had been equipped with gravity elements only.

In an embodiment of the invention, the rigid attachment to the buoyancy element at each of the two ends of the multi-foil lift force creator is provided by penetrating a pin through a multi-foil end cap of the multi-foil lift force creator and through the buoyancy element.

The rigid connections between the multi-foil lift force creator and the spherical buoyancy elements are crucial for ensuring a dynamically stable equilibrium position of the multi-foil lift force creator with high creation of hydrodynamic lift force. Such a rigid connection is conveniently achieved by using a simple pin locking concept, wherein upper and lower protruding flaps of a multi-foil end cap are positioned over and under the spherical buoyancy element, respectively, in such a way that holes through the flaps of the multi-foil end cap are aligned with a channelled hole through the buoyancy element. The tightly fitting lock pin can then be inserted from above, and will, when the shackle (or similar) attachment to the trawl head rope is applied, be rigidly locked in its position by the head of the lock pin in one end and by the shackle attachment device in the other end.

In an embodiment of the invention, the rigid attachment to the buoyancy element at each of the two ends of the multi-foil lift force creator is provided by extending the multi-foil end cap around the buoyancy element.

This type of rigid connection is desirable when high geometrical smoothness is required. The absence of geometrical protrusions, kinks, corners and other angled features minimises the risk of having parts of the trawl net entangled in the multi-foil lift force creator assembly. The attachment to the trawl head rope is then obtained by tying a rope through the hole of the buoyancy element at each end to the trawl head rope, just as is routinely done with conventional single buoyancy elements. This round-going multi-foil end cap can be conveniently manufactured, e.g. by having the buoyancy element positioned inside the mould when injecting the elastomer raw material from which the multi-foil lift force creator can be made. It is also an advantage that, by casting the buoyancy element inside the multi-foil end cap, said buoyancy element becomes well protected against bumps, hits and other mechanical impacts that could cause fracture. On the other hand, the cast-in buoyancy element becomes an integrated part of the multi-foil lift force creator assembly and is, therefore, not replaceable if damaged.

The invention according to claim 10 relates to the use of one or more multi-foil lift force creator assemblies as described above mounted on a fishing trawl head rope of a trawl net during trawling operation therewith.

### The drawings

In the following, a few exemplary embodiments of the invention are described in more detail with reference to the figures, of which
- Fig. 1: is a perspective view of a multi-foil lift force creator according to an embodiment of the invention,
- Fig. 2: is a top view of the same multi-foil lift force creator,
- Fig. 3: is a rear view of the same multi-foil lift force creator,
- Fig. 4: is an end view of the same multi-foil lift force creator,
- Fig. 5: is a perspective view of a multi-foil lift force creator assembly according to an embodiment of the invention, which is mounted on the head rope of a trawl,
- Fig. 6: is an exploded view of the same multi-foil lift force creator assembly,
- Fig. 7: is a perspective view of a vessel towing a fishing trawl with a series of multi-foil lift force creator assemblies according to an embodiment of the invention,
- Fig. 8: is a perspective view of a multi-foil lift force creator according to another embodiment of the invention,
- Fig. 9: is a streamline visualization of the flow through a cross section of a multi-foil lift force creator according to an embodiment of the invention,
- Fig. 10: is a schematic illustration of the co-centricity of the individual hydrofoil elements of a multi-foil lift force creator according to an embodiment of the invention,
- Fig. 11: is a zoomed-in transparent perspective view of a part of a multi-foil lift force creator assembly according to an embodiment of the invention, which is mounted on the head rope of a trawl,
- Fig. 12: is a perspective view from the front side of a multi-foil lift force creator assembly according to an embodiment of the invention, in which the end caps are spherical, and
- Fig. 13: is a perspective view from the rear side of the multi-foil lift force creator assembly shown in Fig. 12.

### Detailed description of the invention

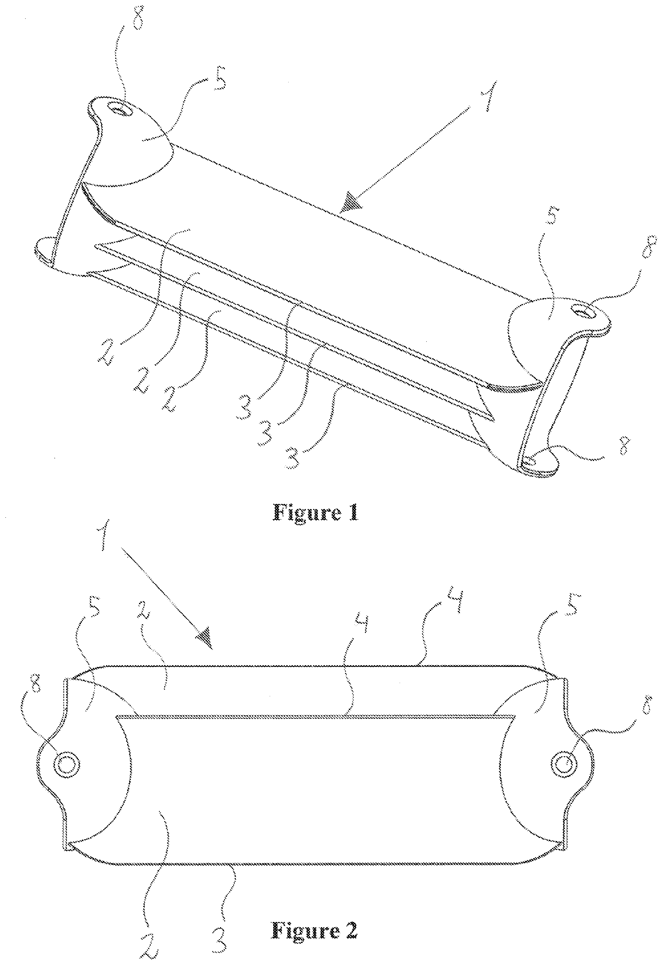

Fig. 1 illustrates a multi-foil lift force creator 1 according to an embodiment of the invention as seen in perspective, comprising a multi-foil end cap 5 at each end and three hydrofoil elements 2 spanning the range between these multi-foil end caps 5. Other illustrated features include lock pin holes 8 through the upper and lower part of the multi-foil end caps 5, and hydrofoil leading edges 3 of the hydrofoil elements 2.

Fig. 2 illustrates the same multi-foil lift force creator 1 as seen from above. It shows that, in this embodiment, the total width of the overlapping hydrofoil elements 2 corresponds roughly to the width of the multi-foil end caps 5. This is to be understood so that the distance between the frontmost hydrofoil leading edge 3 and the rearmost hydrofoil trailing edge 4 is comparable to the diameter of the multi-foil end caps 5.

It is important for operational ease of the multi-foil lift force creator 1 during trawling that it does not occupy more physical space than the buoyancy elements 9 (not shown in this figure) it replaces. In the illustrated embodiment, the multi-foil lift force creator 1 is designed to replace two spherical buoyancy elements 9. In other embodiments, however, the distance between the two multi-foil end caps 5 can be longer, so that the multi-foil lift force creator 1 spans the equivalent space of three, four or even more spherical buoyancy elements 9, or the distance between the two multi-foil end caps 5 can be shorter, so that the multi-foil lift force creator 1 spans the equivalent space of only one spherical buoyancy element 9.

A disadvantage of very short multi-foil lift force creators 1 is the smaller hydrodynamic lift force created. On the other hand, some disadvantages of very long multi-foil lift force creators 1 are
1) the relative reduction of the dynamic stabilization impact from the buoyancy forces from the spherical buoyancy elements 9, and
2) the operational difficulty of handling very long rigid multi-foil lift force creators 1 on a head rope.

It is also important that the trawl net 12 cannot become entangled with any part of the multi-foil lift force creator 1. For this reason, the hydrofoil leading edges 3 and the hydrofoil trailing edges 4 join the multi-foil end caps 5 smoothly at each end with no protruding edges or corners that could otherwise cause entanglement with the trawl net 12.

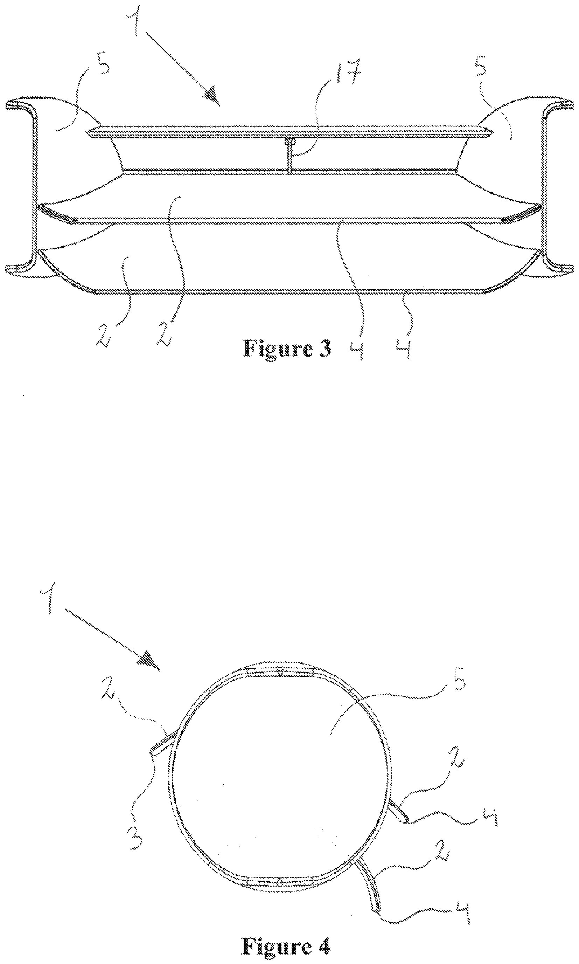

Fig. 3 illustrates the same multi-foil lift force creator 1 as seen from the rear side. A structural stiffener 17 connects the three hydrofoil elements 2 structurally, so that the elastic deformation of the hydrofoil elements 2 during trawling operation is minimized. Depending on the trawling velocity, the choice of material, and the distance between the two multi-foil end caps 5, more than one structural stiffener 17 can be used or, alternatively, no structural stiffener 17 is used.

Fig. 4 illustrates the same multi-foil lift force creator 1 as seen from one end. Visible features are the multi-foil end cap 5, the hydrofoil leading edge 3 of the uppermost hydrofoil element 2 and the hydrofoil trailing edges 4 of the other two hydrofoil elements 2.

When seen from the end, it becomes apparent that the hydrofoil trailing edge 4 of the lowermost hydrofoil element 2 protrudes relatively much outside the projected circle of the end cap 5. This trailing edge 4 protrusion serves the hydrodynamic purpose of dynamic stabilization of the multi-foil lift force creator 1 during trawling operation. The absence of the lowermost hydrofoil element 2 trailing edge 4 protrusion would cause the multi-foil lift force creator 1 to be pushed backwards during trawling, such that hydrodynamic stall would occur over the hydrofoil elements 2 and, consequently, lead to dynamic instability and a severe loss of hydrodynamic lift, the creation of which is the whole purpose of the invention.

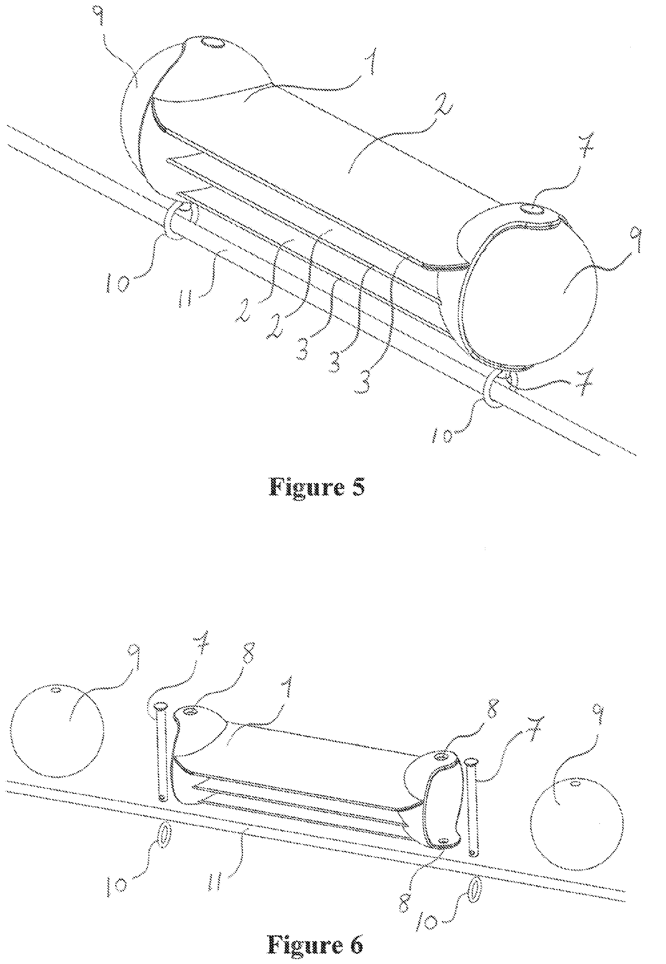

Fig. 5 illustrates a multi-foil lift force creator assembly mounted on a trawl head rope 11 as seen in perspective. The multi-foil lift force creator assembly comprises a multi-foil lift force creator 1 as shown in the previous figures and two spherical buoyancy elements 9, lock pins 7 and attachment shackles 10.

In the illustrated embodiment, the multi-foil lift force creator comprises three hydrofoil elements 2. In other embodiments, however, the number of hydrofoil elements can be two, four or even higher.

The multi-foil lift force creator assembly attached to the trawl head rope 11 constitutes a hydro-dynamically stable system which, when being towed through the water by a trawling vessel 13 (not shown in this figure) finds the hydrodynamic equilibrium position at a relative angle between the multi-foil lift force creator assembly and the water flowing through, in which a high level of hydrodynamic lift force is created. In this equilibrium position, the multi-foil lift force creator assembly has no mechanical moment around an imagined "hinge axis" through the trawl head rope 11. The equilibrium motion around the trawl head rope 11 "hinge axis" is the only dynamic degree of freedom for the multi-foil lift force creator assembly, which otherwise constitutes a rigid entity.

Lock pins 7 are inserted at each end through two lock pin holes 8 in the multi-foil end cap 5 and the buoyancy element 9. A through-going hole in the protruding end of the lock pin 7 is used for the attachment to the trawl head rope 11 by means of an attachment device, for instance in the form of a shackle, a metal ring a tied rope or something similar. The multi-foil lift force creator assembly is physically attached to the trawl net 12 only through the attachment device 10 mounted around the trawl head rope 11.

Fig. 6 is an exploded view of the multi-foil lift force creator assembly mounted on a trawl head rope 11 illustrated in Fig. 5.

The fitting tolerances between the lock pins 7 on one side and the lock pin holes 8 and the through-going hole of the spherical buoyancy element 9 on the other side, are tight in order to ensure that surface scratching between the components and overall dynamic wear are minimized.

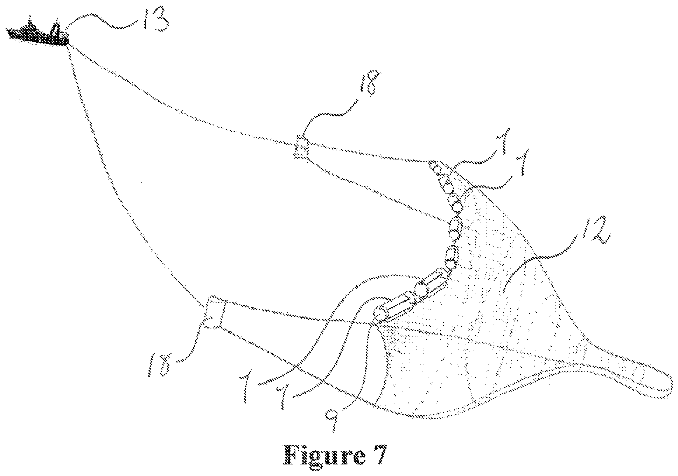

Fig. 7 is a perspective view of a vessel 13 towing a trawl configuration comprising two trawl doors 18 and a trawl net 12, where the upper trawl head rope 11, i.e. the floatline, of the trawl net 12 is equipped with a series of multi-foil lift force creator assemblies according to an embodiment of the invention.

For visualization clarity, number of multi-foil lift force creator assemblies on the trawl head rope 11 is only seven. Typically, a trawl head rope 11 on a large commercial fishing vessel 13 can be equipped with several hundreds of spherical buoyancy elements 9, which is equivalent to the use of a number of between 50 and 100 multi-foil lift force creator assemblies.

The illustrated trawl configuration operates in pelagic (open water) conditions, but it could also have been a bottom trawl, where the lower trawl head rope 11 (the footrope) would be hauled over the seabed surface. For the shown pelagic trawl configuration, the upper trawl head rope 11 is equipped with multi-foil lift force creator assemblies in order to substantially increase the upward directed forcing on the upper head rope 11 (the floatline). However, multi-foil lift force creator assemblies could also have been attached to the lower trawl head rope 11, in which case the hydro-dynamically generated forcing would be directed downward and the spherical buoyancy elements 9 would not be air-filled floats but heavier-than-water spherical gravity elements.

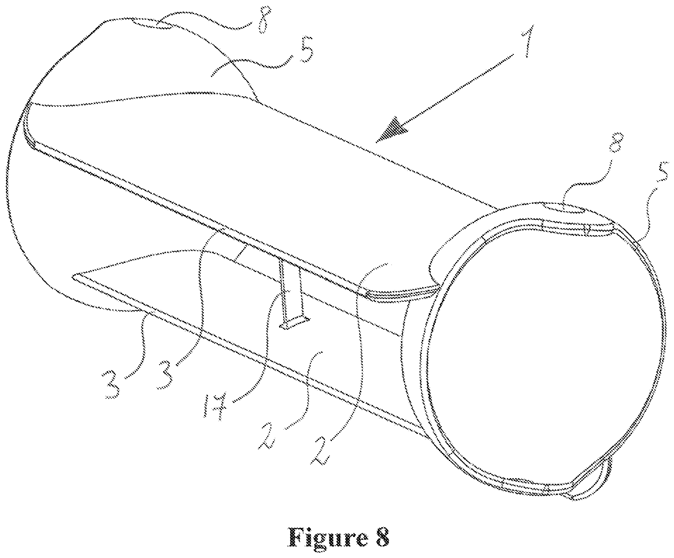

Fig. 8 illustrates a multi-foil lift force creator 1, in which the multi-foil lift force creator 1 only comprises two hydrofoil elements 2. This exemplifies that any plurality of stacked hydrofoil elements 2 can be used in multi-foil lift force creators 1 according to the present invention. Specifically, two hydrofoil elements 2 will work well, as will three or even four hydrofoil elements 2. If the number of hydrofoil elements 2 is increased further, the multi-foil flow channels 16 between the hydrofoil elements 2 may become increasingly too narrow, and no additional hydrodynamic lift force will be obtained.

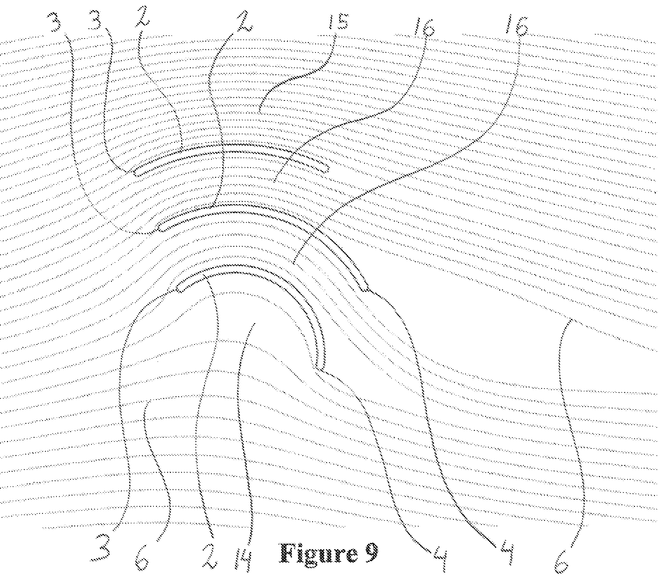

Fig. 9 is a streamline visualization of the flow through a cross section of a multi-foil lift force creator 1 according to an embodiment of the invention. It displays the paths of the water fluid particles as they pass the hydrofoil elements 2. Notable characteristics of the streamlines 6 are the attached flow over most parts of the hydrofoil elements 2, especially on the multi-foil suction side 15, the multi-foil pressure side 14 and through the multi-foil flow channels 16, and the slight onset of flow separation, also called "stall", near the hydrofoil trailing edge 4 of the two lower hydrofoil elements 2. This limited and controlled degree of stall in the lower rear regions of the multi-foil lift force creator 1 contribute to a smooth and stable dynamic behaviour, ensuring an equilibrium angle between the multi-foil lift force creator 1 and the towing direction that leads to a very high creation of hydrodynamic lift force.

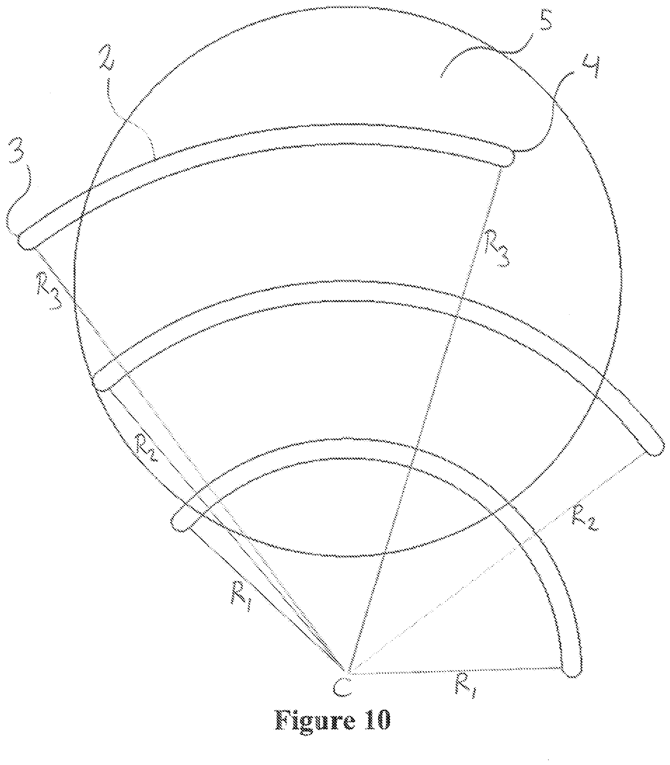

Fig. 10 illustrates a transparent end-projection of a multi-foil end cap 5 and the hydrofoil elements 2 of a multi-foil lift force creator 1 making visible the co-centricity of the hydrofoil elements 2. The centre point C is the circle centre for all three hydrofoil elements 2, all of which form circular arc segments with radius R1, R2 and R3 respectively.

The purpose of designing the hydrofoil elements 2 as co-centric arc segments is twofold: Firstly, a high hydrodynamic performance and stability is readily achieved with this kind of geometry, and secondly, a simple mould with an upper part, a lower part and a hinge axis through the centre point C can be used for manufacturing. Thus, the co-centricity serves a manufacturing purpose of easy de-forming the multi-foil lift force creator 1 specimen from the mould after, e.g., injection moulding.

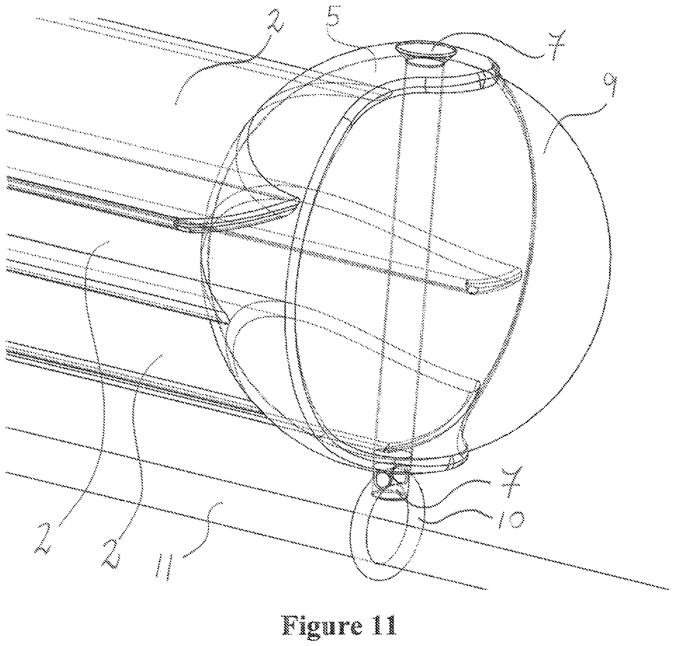

Fig. 11 illustrates a zoomed-in transparent and perspective view of a part of a multi-foil lift force creator assembly with a buoyancy element 9, a lock pin 7 and an attachment shackle 10, which is mounted on a trawl head rope 11. The simple locking concept of the lock pin 7 is illustrated here: The upper and lower end of the multi-foil end cap 5 are positioned over the spherical buoyancy element 9 so that the lock pin holes 8 are aligned with the hole through the buoyancy element 9. The tightly fitting lock pin 7 is then inserted from above, and is, when the attachment device 10 (shackle or similar) is applied, rigidly locked in its position by the head of the lock pin 7 in one end and by said the attachment device 10 in the other end.

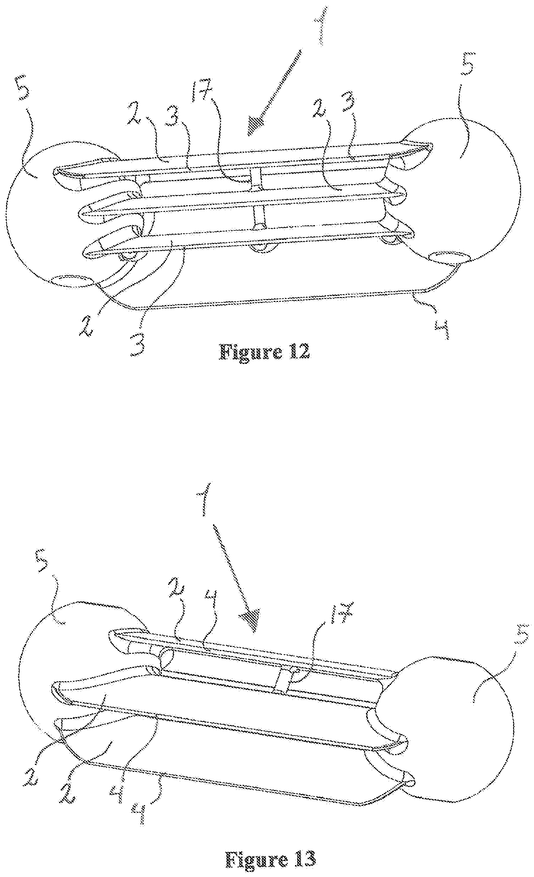

Figs. 12 and 13 illustrate a perspective view from the front side and the rear side, respectively, of a multi-foil lift force creator assembly comprising three hydrofoil elements 2 with leading edges 3 and trailing edges 4 (of which only one is visible), a structural stiffener 17 and a multi-foil end cap 5 at each end. Each of these multi-foil end caps 5 is spherical and, except for the upper and lower holes through which a rope or the like is used for attachment to the trawl head rope, the multi-foil end cap 5 substantially encloses the contained spherical buoyancy element 9 (not shown).

The purpose of substantially enclosing the spherical buoyancy element 9 inside the multi-foil end cap 5 is to obtain a rigid connection between the hydrodynamic force creating hydrofoil elements 2 and the spherical buoyancy element 9, which is as geometrically smooth as possible. The absence of geometrical protrusions, kinks, corners and other angled features minimises the risk of having parts of the trawl net entangled in the multi-foil lift force creator assembly during trawling operation.

### List of references

- 1.: Multi-foil lift force creator
- 2.: Hydrofoil element
- 3.: Hydrofoil leading edge
- 4.: Hydrofoil trailing edge
- 5.: Multi-foil end cap
- 6.: Streamlines (for purpose of flow visualization only)
- 7.: Lock pin
- 8.: Lock pin hole
- 9.: Spherical buoyancy element (float or gravity element)
- 10.: Attachment device (ring, shackle, rope or similar)
- 11.: Trawl head rope ("floatline" or "footrope")
- 12.: Trawl net
- 13.: Vessel
- 14.: Multi-foil pressure side
- 15.: Multi-foil suction side
- 16.: Multi-foil flow channel
- 17.: Structural stiffener
- 18.: Trawl door

- C.: Circular arc centre
- R1.: Circular arc radius, hydrofoil element 1
- R2.: Circular arc radius, hydrofoil element 2
- R3.: Circular arc radius, hydrofoil element 3

## Claims

1. A multi-foil lift force creator (1) for a fishing trawl, said multi-foil lift force creator comprising a plurality of hydrofoil elements (2) aligned in a stacked manner and designed to be arranged between and attached rigidly at both ends to a spherical buoyancy element (9) in the form of a float or gravity element for being mounted on a fishing trawl head rope (11),
wherein the hydrofoil elements are shaped to deflect the water during towing of the trawl net (12) in such a way that the hydrodynamic force thereby created complements the buoyancy force from the buoyancy elements, and
wherein, rather than having butt ends, the hydrofoil elements join smoothly to multi-foil end caps (5) fitting tightly around the two buoyancy elements at the ends of the multi-foil lift force creator, respectively.

2. The multi-foil lift force creator according to claim 1, wherein the multi-foil lift force creator is made of a hard plastic elastomer material, such as polyurethane.

3. The multi-foil lift force creator according to claim 1 or 2, further comprising one or more structural stiffeners (17) arranged to pass through the hydrofoils elements thereof.

4. The multi-foil lift force creator according to any of the preceding claims, wherein a cross-section of the plurality of hydrofoil elements consists essentially of a plurality of concentric circular arc sections.

5. A multi-foil lift force creator assembly for a fishing trawl, said multi-foil lift force creator assembly comprising a multi-foil lift force creator (1) according to any of the preceding claims and two spherical buoyancy elements (9) in the form of floats or gravity elements for being mounted on a fishing trawl head rope (11), wherein the multi-foil lift force creator is attached rigidly at both ends to the two buoyancy elements, respectively.

6. The multi-foil lift force creator assembly according to claim 5, wherein the two buoyancy elements are floats.

7. The multi-foil lift force creator assembly according to claim 5, wherein the two buoyancy elements are gravity elements.

8. The multi-foil lift force creator assembly according to any of claims 5-7, wherein the rigid attachment to the buoyancy element at each of the two ends of the multi-foil lift force creator is provided by penetrating a pin through a multi-foil end cap (5) of the multi-foil lift force creator and through the buoyancy element.

9. The multi-foil lift force creator assembly according to any of claims 5-7, wherein the rigid attachment to the buoyancy element at each of the two ends of the multi-foil lift force creator is provided by extending the multi-foil end cap (5) around the buoyancy element.

10. The use of one or more multi-foil lift force creator assemblies according to any of claims 5-9 mounted on a fishing trawl head rope (11) of a trawl net (12) during trawling operation therewith.

## Patentansprüche

1. Auftriebskraftschöpfer mit mehreren Tragflächen (1) für ein Fischschleppnetz, welcher Auftriebskraftschöpfer mit mehreren Tragflächen eine Mehrheit von Tragflächenelementen (2) umfasst, die gestapelt ausgerichtet sind und zur Anordnung zwischen und zur starren Befestigung in beiden Enden an einem kugelförmigen Schwimmelement (9) in Form eines Schwimmers oder Schwerkraftelements zum Montieren auf einem Fischschleppnetzhauptseil (11) ausgeformt sind,
wobei die Tragflächenelemente dafür ausgeformt sind, während des Schleppens des Schleppnetzes (12) das Wasser so abzubiegen, dass die dadurch erzeugte hydrodynamische Kraft die Schwimmkraft der Schwimmelemente unterstützt, und
wobei, anstatt von stumpfen Enden aufzuweisen, verbinden sich die Tragflächenelemente gleichmäßig zu Endkappen mit mehreren Tragflächen (5), die um die zwei Schwimmelemente an den jeweiligen Enden des Auftriebskraftschöpfers mit mehreren Tragflächen dicht herumpassen.

2. Auftriebskraftschöpfer mit mehreren Tragflächen nach Anspruch 1, wobei der Auftriebskraftschöpfer mit mehreren Tragflächen aus einem harten Kunststoffmaterial wie beispielsweise Polyurethan hergestellt ist.

3. Auftriebskraftschöpfer mit mehreren Tragflächen nach Anspruch 1 oder 2, weiter umfassend eine oder mehrere Strukturabsteifungen (17), die dafür eingerichtet sind, durch die Tragflächenelemente davon durchzugehen.

4. Auftriebskraftschöpfer mit mehreren Tragflächen nach einem der vorgehenden Ansprüche, wobei ein Querschnitt der Mehrheit von Tragflächenelementen im Wesentlichen aus einer Mehrheit von konzentrischen kreisförmigen Bogenabschnitten bestehen.

5. Auftriebskraftschöpfereinheit mit mehreren Tragflächen für ein Fischschleppnetz, welche Auftriebskraftschöpfereinheit mit mehreren Tragflächen einen Auftriebskraftschöpfer mit mehreren Tragflächen (1) nach einem der vorgehenden Ansprüche und zwei kugelförmige Schwimmelemente (9) in Form von Schwimmern oder Schwerkraftelemente zum Montieren auf einem Fischschleppnetzhauptseil (11) umfasst, wobei der Auftriebskraftschöpfer mit mehreren Tragflächen in beiden Enden jeweils an den zwei Schwimmelementen starr befestigt sind.

6. Auftriebskraftschöpfereinheit mit mehreren Tragflächen nach Anspruch 5, wobei die zwei Schwimmelemente Schwimmer sind.

7. Auftriebskraftschöpfereinheit mit mehreren Tragflächen nach Anspruch 5, wobei die zwei Schwimmelemente Schwerkraftelemente sind.

8. Auftriebskraftschöpfereinheit mit mehreren Tragflächen nach einem der Ansprüche 5-7, wobei die starre Befestigung am Schwimmelement an jedem von den beiden Enden des Auftriebskraftschöpfers mit mehreren Tragflächen durch Durchstechen eines Zapfens durch eine Endkappe mit mehreren Tragflächen (5) des Auftriebskraftschöpfers mit mehreren Tragflächen und durch das Schwimmelement vorgesehen ist.

9. Auftriebskraftschöpfereinheit mit mehreren Tragflächen nach einem der Ansprüche 5-7, wobei die starre Befestigung am Schwimmelement an jedem von den beiden Enden des Auftriebskraftschöpfers mit mehreren Tragflächen durch Verlängern der Endkappe mit mehreren Tragflächen (5) um das Schwimmelement herum vorgesehen ist.

10. Anwendung von einer oder mehreren Auftriebskraftschöpfereinheiten mit mehreren Tragflächen nach einem der Ansprüche 5-9, montiert auf einem Fischschleppnetzhauptseil (11) eines Schleppnetzes (12) während Schleppnetzfischereibetrieb damit.

## Revendications

1. Créateur de force de levage à feuilles multiples (1) pour un chalut de pêche, ledit créateur de force de levage à feuilles multiples comprenant une pluralité d'éléments d'aile portante (2) alignés de manière empilée et conçus pour être disposés entre et fixés rigidement aux deux extrémités à un élément de flottabilité sphérique (9) dans la forme d'un flotteur ou d'un élément gravitaire destiné à être monté sur une corde de tête de chalut de pêche (11),
dans lequel les éléments d'aile portante sont conformés pour dévier l'eau pendant le remorquage du chalut (12) d'une telle manière que la force hydrodynamique ainsi créée complète la force de flottabilité des éléments de flottabilité, et
dans lequel, plutôt que d'avoir des extrémités aboutées, les éléments d'aile portante rejoignent des capuchons d'extrémité à feuilles multiples (5) en douceur s'ajustant étroitement autour des deux éléments de flottabilité aux extrémités du créateur de force de levage à feuilles multiples, respectivement.

2. Créateur de force de levage à feuilles multiples selon la revendication 1, dans lequel le créateur de force de levage à feuilles multiples est constitué d'un matériau élastomère en plastique dur, tel que du polyuréthane.

3. Créateur de force de levage à feuilles multiples selon la revendication 1 ou 2, comprenant en outre un ou plusieurs raidisseurs structurels (17) agencés pour traverser les éléments d'aile portante de ceux-ci.

4. Créateur de force de levage à feuilles multiples selon l'une quelconque des revendications précédentes, dans lequel une section transversale de la pluralité d'éléments d'aile portante consiste essentiellement en une pluralité de sections d'arc circulaires concentriques.

5. Ensemble créateur de force de levage à feuilles multiples pour un chalut de pêche, ledit ensemble créateur de force de levage à feuilles multiples comprenant un créateur de force de levage à feuilles multiples (1) selon l'une quelconque des revendications précédentes et deux éléments de flottabilité sphériques (9) dans la forme de flotteurs ou d'éléments gravitaires destinés à être montés sur une corde de tête de chalut de pêche (11), dans lequel le créateur de force de levage à feuilles multiples est attaché rigidement aux deux extrémités aux deux éléments de flottabilité, respectivement.

6. Ensemble créateur de force de levage à feuilles multiples selon la revendication 5, dans lequel les deux éléments de flottabilité sont des flotteurs.

7. Ensemble créateur de force de levage à feuilles multiples selon la revendication 5, dans lequel les deux éléments de flottabilité sont des éléments de gravité.

8. Ensemble créateur de force de levage à feuilles multiples selon l'une quelconque des revendications 5 à 7, dans lequel la fixation rigide à l'élément de flottabilité à chacune des deux extrémités du créateur de force de levage à feuilles multiples est fournie en pénétrant une broche à travers une capuchon d'extrémité à feuilles multiples (5) du créateur de force de levage à feuilles multiples et à travers l'élément de flottabilité.

9. Ensemble créateur de force de levage à feuilles multiples selon l'une quelconque des revendications 5 à 7, dans lequel la fixation rigide à l'élément de flottabilité à chacune des deux extrémités du créateur de force de levage à feuilles multiples est fournie en étendant le capuchon d'extrémité à feuilles multiples (5) autour de l'élément de flottabilité.

10. Utilisation d'un ou de plusieurs ensembles créateurs de force de levage à feuilles multiples selon l'une quelconque des revendications 5 à 9 montés sur une corde de tête de chalut de pêche (11) d'un filet de chalut (12) pendant l'opération de chalutage avec celui-ci.
